# EUROPEAN PATENT SPECIFICATION

(11) **EP 3 774 992 B1**
(45) Date of publication and mention of the grant of the patent: **03.09.2025**
(21) Application number: 19718009.4
(22) Date of filing: 29.03.2019
(51) Int. Cl.: C08G 71/02, C11D 1/14, C11D 3/386, C11D 3/50, B33Y 70/00, C11D 3/37

(54) **POLYMERIC MATERIALS AND ARTICLES MANUFACTURED THERE FROM**
POLYMERE MATERIALIEN UND DARAUS HERGESTELLTE ARTIKEL
MATÉRIAUX POLYMÈRES ET ARTICLES FABRIQUÉS À PARTIR DE CEUX-CI

(30) Priority: 10.04.2018 US 201862655393 P
(43) Date of publication of application: 17.02.2021
(73) Proprietor: The Procter & Gamble Company, Cincinnati, OH 45202 (US); Virginia Polytechnic Institute and State University, Blacksburg, VA 24061 (US)
(72) Inventor: HODGDON, Travis, Kyle, Cincinnati, Ohio 45202 (US); GRAHAM, Douglas, Michael, Cincinnati, Ohio 45202 (US); BARNABAS, Freddy, Arthur, Cincinnati, Ohio 45202 (US); KENNEALLY, Corey, James, Cincinnati, Ohio 45202 (US); WILLIAMS, Christopher, Bryant, Blacksburg, Virginia 24061 (US); ZAWASKI, Callie, Elizabeth, Blacksburg, Virginia 24061 (US); LONG, Timothy, E., Blacksburg, Virginia 24061 (US); PEKKANEN, Allison, Blacksburg, Virginia 24061 (US); WHITE, Benjamin, Tyler, Blacksburg, Virginia 24061 (US)
(74) Representative: P&G Patent Belgium UK
(86) International application number: PCT/US2019/024724
(87) International publication number: WO 2019/199481

(56) References cited:
- WO-A1-03/097757
- WO-A1-2007/098040
- WO-A1-2009/085285
- WO-A1-2012/095236
- WO-A1-2015/013407
- WO-A1-2017/112751
- WO-A1-2017/130685
- WO-A1-2018/046569
- WO-A1-2018/085066
- WO-A2-2004/048472
- WO-A2-2005/054325
- JP-A- 2005 096 199
- US-A- 4 002 598
- US-A- 4 384 951
- US-A- 5 109 061
- US-A1- 2012 226 075
- US-A1- 2016 326 319
- US-B1- 6 320 066
- HUNTSMAN: "The JEFFAMINE Polyetheramines", HUNTSMAN, 9 August 2017 (2017-08-09), pages 1 - 6, XP055463093

## Description

### FIELD OF THE INVENTION

The invention relates to methods and materials for manufacturing articles. The invention relates particularly to manufacturing water soluble articles from modified polyurea materials as a sequence of voxels.

### BACKGROUND OF THE INVENTION

Manufacturing articles from polymeric materials is well known in the technological arts. Manufacturing articles as a presented sequence of volume elements (voxels) derived from a digital representation of an article is also well known. That some envisioned articles may have greater utility depending upon the extent to which at least portions of the respective articles are water soluble can be envisioned. Water soluble polymers are not generally dimensionally stable enough to enable the manufacturing of objects on a voxel-by-voxel basis without a material constraining mold or support structure. In addition to dimensional stability, the ability to adjust, or tune, the rate at which an article dissolves when in use, and the ability to process the material into an article at temperatures at or below the respective boiling points of carrier solvents such as water and alcohol, is also beneficial to preserve the nature of temperature sensitive benefit agents. What is needed is a polymeric material which is both dimensionally stable enough to enable the creation of objects by fabricating a series of voxels according to a digital representation of the desired object at temperatures which preserve the utility of benefit agents, as well as soluble in an aqueous environment to yield the desired advanced utility; and a method for manufacturing articles from such a material.
US 4 384 951 A, US 5 109 061 A, US 4 002 598 A, US 2016/326319 A1, WO 2012/095236 A1, WO 2007/098040 A1, WO 2004/048472 A2, WO 2005/054325 A2, US 6 320 066 B1, WO 03/097757 A1, WO 2018/085066 A1, US 2012/226075 A1, WO 2009/085285 A1, WO 2015/013407 A1 discuss polyureas obtained from Jeffamine^{®} components.

### SUMMARY OF THE INVENTION

In one aspect, a method for manufacturing a three-dimensional object includes steps of:
a) providing a digital description of the object as a set of voxels; b) sequentially creating an actual set of voxels corresponding to the digital set of voxels; wherein at least one voxel comprises a water-soluble poly urea derived from: i) a polymer or mixture of polymers of the structure: 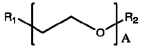 , where R₁ is selected from the group consisting of: -OCH3, -OH, -NH2, and 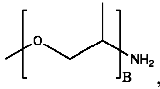 R2 is selected from the group consisting of: -(C2H4)NH2, -CH3, -H, and 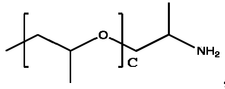 A is between about 10 and about 300, (B+C)/A is between about 0 and about 0.6; and a linker ii) selected from the group consisting of: urea, methylene diphenyl diisocyanate, toluene diisocyanate, hexamethylene diisocyanate, isophorone diisocyanate and mixtures thereof. At least one R₁ or R₂ group contains nitrogen and the molar ratio of nitrogen containing R₁ and R₂ groups in (i) to (ii) is about 1:1.
In one aspect, an article comprises a water-soluble poly urea derived from: i) a polymer or mixture of polymers of the structure: 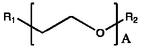 , where R₁ is selected from the group consisting of: - OCH3, -OH, -NH2, and 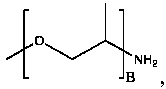 R2 is selected from the group consisting of: - (C2H4)NH2, -CH3, -H, and 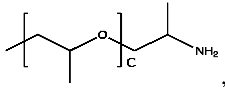 A is between about 10 and about 300, (B+C)/A is between about 0 and about 0.6; and a linker ii) selected from the group consisting of: urea, methylene diphenyl diisocyanate, toluene diisocyanate, hexamethylene diisocyanate, isophorone diisocyanate and mixtures thereof. At least one R₁ or R₂ group contains nitrogen and (ii) the molar ratio of nitrogen containing R₁ and R₂ groups in (i) to (ii) is about 1:1.

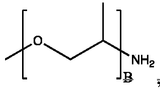

In one aspect, a three-dimensional article according to the claims is provided.

### DETAILED DESCRIPTION OF THE INVENTION

In one embodiment, a method for manufacturing a three-dimensional object includes steps of: a) providing a digital description of the object as a set of voxels; b) sequentially creating an actual set of voxels corresponding to the digital set of voxels; wherein at least one voxel comprises a water-soluble poly urea derived from: i) a polymer or mixture of polymers of the structure: 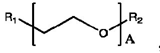 where R₁ is selected from the group consisting of: -OCH3, -OH, -NH2, 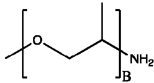 and mixtures thereof, R2 is selected from the group consisting of: -(C2H4)NH2, -CH3, -H, 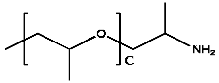 and mixtures thereof, A is between about 10 and about 300, (B+C)/A is between about 0 and about 0.6; and a linker ii) selected from the group consisting of: urea, methylene diphenyl diisocyanate, toluene diisocyanate, hexamethylene diisocyanate, isophorone diisocyanate and mixtures thereof. At least one R₁ or R₂ group contains nitrogen and the molar ratio of nitrogen containing R₁ and R₂ groups in (i) to (ii) is about 1:1.

The digital description of the object as a set of voxels may be the result of a digital design process using computer aided design software to create a representation of the object. In one embodiment, the digital description may be result of scanning an object to create a digital representation of the object. The initial scanning of the object may result in a digital file which may be enhanced or otherwise altered using appropriate software. In one embodiment, a set of two dimensional images may be interpolated to yield a three dimensional representation of the object as an array or sequence of voxels. The digital description may be provided as an .stl or other known file format.

The provided digital description may be translated to an actual object by the creation of an actual set of voxels corresponding to the set of voxels in the digital representation. This translation may be accomplished using known additive manufacturing techniques including material extrusion techniques, and those techniques referred to as 3D printing, or three-dimensional printing techniques. Exemplary apparatus for the translation include fused deposition modeling (FDM) where each digital voxel is translated to an actual voxel by depositing a single liquid drop of material from a nozzle onto a build platform that freezes, cures or hardens to form the actual voxel. The nozzle and/ or build-platform move to allow for at least three dimensions of orthogonal motion relative to one another. Voxels are typically deposited to form a two-dimensional layer and then another layer of fluid material is deposited over the preceding layer to form the three-dimensional object. The liquid droplet size and the distance between the dispensing nozzle and the proceeding layer control voxel size. Material for extrusion through the nozzle may be in a filament, pellet, powder or liquid form. A plurality of build materials may be used. It is preferred that the build-platform, nozzle and any liquid reservoir is temperature controlled. A fan may be used to aid in cooling of extruded material. The final object may be post processed using any known methods including sanding, polishing and steaming to improve surface finish.

In one embodiment, each voxel of the set of voxels of the actual article is comprised of substantially the same material as all other voxels of the set. Alternatively, respective portions of the overall set of voxels may be comprised of differing materials.

At least one voxel of the set of voxels in the actual object resulting from the translation, comprises a water-soluble poly urea derived from: i) a polymer or mixture of polymers of the structure: 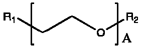 , where R₁ is selected from the group consisting of: -OCH3, -OH, -NH2, and 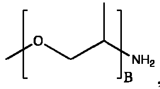 R2 is selected from the group consisting of: -(C2H4)NH2, -CH3, -H, and 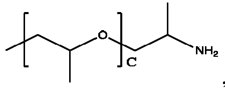 A is between about 10 and about 300, (B+C)/A is between about 0 and about 0.6; and a linker ii) selected from the group consisting of: urea, methylene diphenyl diisocyanate, toluene diisocyanate, hexamethylene diisocyanate, isophorone diisocyanate and mixtures thereof. At least one R₁ or R₂ group contains nitrogen and the molar ratio of nitrogen containing R₁ and R₂ groups in (i) to (ii) is about 1:1.

In one embodiment, the polymer comprises a polyethylene glycol diamine having an average molecular weight of about 2000 AMU (average of 44.4 ethylene oxide repeat units). In one embodiment the polymer comprises a PEG diamine having an average molecular weight of about 6000 AMU (average of 135 ethylene oxide repeat units). In one embodiment, the polymer comprises a PEG diamine having an average molecular weight of about 10,000 AMU (average of 226 ethylene oxide repeat units).

In one embodiment, the polymer may comprise a O,O'-bis(2-aminopropyl) polypropylene glycol-block-polyethylene glycol-block-polypropylene glycol polymer commercially available from Huntsman (Woodlands, TX) under the tradenames JEFFAMINE ^{®} ED600, ED900 and ED2003. In one embodiment, the polymer comprises poly(ethylene glycol)-block-poly(propylene glycol) bis(2-amiopropyl ether) available from Huntsman (Woodlands, TX) under the tradenames JEFFAMINE ^{®} M-1000 and M-2070.

The polymer contains a linker which is a monomer capable of forming two or more urea bonds when reacted with primary amines. In one embodiment, the linker is urea. In another embodiment, the linker is a molecule comprising two or more isocyanate moieties. In one embodiment, the linker is a diisocyanate. Examples of diisocyanates include methylene diphenyl diisocyanate, toluene diisocyanate, hexamethylene diisocyanate and isophorone diisocyanate. Mixtures of linkers can be used.

The voxel further comprises between about 0 and about 65 weight percent (wt. %) of a filler, wherein the filler is a solid at temperatures greater than the melting, processing and printing temperature of the overall composition. Fillers may be organic, inorganic or of mixed inorganic/ organic nature. Suitable fillers are selected from the group consisting of: starches, gums, water soluble polymers, water degradable polymers, water insoluble polymers, sugars, sugar alcohols, inorganic particles, surfactants, fatty amphiphiles and mixtures thereof.

Starches may be sourced from plant materials including: corn, wheat, potato, rice, cassava and tapioca. Starches may be unmodified, modified, or partially degraded. Modified starch may include cationic starch, hydroxyehtyl starch, carboxymethylated starch, and polylactic acid graft-starch and polycaprylactone graft starch. Degraded starches may include dextrin and maltodextrin preferably with a dextrose equivalent of 30 or lower.

Gums can be extracted from natural sources, modified from natural sources or fermented. Suitable natural sources from gums include trees, plants, animals and seeds. Examples of natural gums include gum acacia, gum tragacanth, gum karaya, gum ghatti, nanocrylstalline cellulose, pectin, carrageenan, agar, furcellaran, konjac gum, gelatin, guar gum, locust bean gum, tara gum, cassia gum, mesquite gum, tamarind seed gum, quince seed gum, flaxseed gum, phyllium seed gum, oat gum, and microfibrillated cellulose. Gums may also be modified to create alkali cellulose, salts of carboxymethylcellulose, methylcellulose, hydroxypropyl methylcellulose, and hydroxypropyl cellulose. Examples of fermented gums are xanthan gum, dextran and pullulan.

Suitable water-soluble polymers may be synthesized using vinyl addition reaction or ring opening synthesis. Examples of vinyl addition polymers are polyvinyl alcohol, poly(acrylic acid), poly(methacrylic acid), poly(2-dimethylamino ethyl methacrylate) methyl chloride quaternary salt, Poly(2-dimethylamino ethylacrylate) methyl chloride quaternary salt, poly(allylamine), polyacrylamide, polymethacrylamide, poly[n-(2-hydroxypropyl) methacrylamide], Poly((3-acrylamidopropyl)trimethylammonium chloride), poly(n-(2-aminoethyl) methacrylamide hydrochloride quantized salt), poly(N-isopropylacrylamide), polyvinylpyrrolidone, poly(diallyl dimethyl ammonium chloride), poly(styrenesulfonic acid), and poly(vinyl phosphoric acid). Examples of ring opening synthesized polymers include poly(2-oxazoline), poly(2-ethyl-2-oxazoline), polyethyleneimine, poly(maleic anhydride), and polyaspartic acid. Water soluble copolymers such as poly(vinyl alcohol)-co-poly(ethylene glycol) available as Kollicoat^{®} from BASF.

Water degradable polymers typically contain an ester bond in their backbone leading to hydrolysis in water. Examples of water degradable polymers are polylactic acid, polyglycolic acid, polybutylene succinate, polycaprolactone, polybutyrate, and poly(glycolic acid-co-lactic acid).

Examples of water insoluble polymers include nylon, polystyrene, polyurethane, polyvinyl chloride, polytetrafluoroethylene, latex and polyethylene. Latex may be natural rubber or synthetic. Commonly available synthetic latexes include nitrile rubber, polychloroprene, butyl rubber, fluorocarbon rubber, polyurethane, styrene-butadiene rubber and blends thereof. Polyethylene particles are available under the tradename VELUSTROL from HOECHST Aktiengesellschaft of Frankfurt am Main, Germany.

Examples of sugars and sugar alcohols include glucose, fructose, galactose, sucrose, maltose, lactose and trehalose. Examples of sugar alcohols include erythritol, threitol, arabitol, ribitol, xylitol, mannitol, sorbitol, galactitol, iditol, volemitol, fucitol, inositol, maltitol and lactitol.

Examples of inorganic particles include silica, fumed silica, precipitated silica, talcum powder, graphite, aluminum oxide, iron oxide, antimony trioxide, copper, bentonite clay, laponite clay, aluminum silicate clay, calcium carbonate, sodium chloride, magnesium chloride, calcium chloride, tetramethyl ammonium chloride, alumina, titanium dioxide, chalk, titanium hydroxide, gypsum powder and sodium sulfate.

Examples of organic salts include choline chloride, betaine, sorbic acid, and uric acid.

Examples of surfactants can be cationic, anionic, nonionic or zwitterinoic and include sodium dodecyl sulfate, sodium dodecylbenzenesulfonate, glucose amide, cetyl and trimethylammonium bromide.

Examples of fatty amphiphiles are fatty alcohols, alkoxylated fatty alcohols, fatty phenols, alkoxylated fatty phenols, fatty amides, alkyoxylated fatty amides, fatty amines, fatty alkylamidoalkylamines, fatty alkyoxyalted amines, fatty carbamates, fatty amine oxides, fatty acids, alkoxylated fatty acids, fatty diesters, fatty sorbitan esters, fatty sugar esters, methyl glucoside esters, fatty glycol esters, mono, di- and tri-glycerides, polyglycerine fatty esters, alkyl glyceryl ethers, propylene glycol fatty acid esters, cholesterol, ceramides, fatty silicone waxes, fatty glucose amides, and phospholipids.

Mixtures of fillers may be used. These mixtures can be physical blends of two or more types of fillers or two or more fillers that are melted or dissolved together to form a single filler comprising two or more materials. Suitable methods for forming filler particles include any typical method for creating powders such as grinding, milling, spray drying, roll drying, and prilling. Every dimension of the filler particles should be smaller than the FDM printer nozzle diameter, more preferably less than 0.5 times and more preferably less than 0.1 times the FDM printer nozzle diameter. The size of filler particles can be reduced by any common method for segregating or reducing particle size including sieving, grinding, cryogenic grinding, and milling. Size and shape of the filler particles can be determined by common means such as sieving through a series of mesh screens or laser diffraction. In one embodiment, the filler particles are spherical or ellipsoidal in shape. Exemplary filler particles are spherical in shape.

The melting temperature of the filler particle must be greater than the melting, processing and printing temperatures of the final mixture. Melting temperature of the filler particles may be determined through standard methods including differential scanning calorimetry or a melt point apparatus.

The composition may further comprise a plasticizing agent to tune the viscosity of the poly urea composition. Some examples of suitable plasticizing agents include water, polyethylene glycol with a weight average molecular weight of 1,000 g/ mol or lower, water, ethylene glycol, propylene glycol, diethylene glycol, and glycerin. In one embodiment, the plasctizing agent is present from about 1 to about 25 percent by weight or from about 2 to about 20 percent by weight or form about 5 to about 15 percent by weight of the formulation.

In one embodiment the three-dimensional object is a consumer product. Examples of consumer products include, baby care, beauty care, fabric & home care, family care, feminine care, health care products or devices intended to be used or consumed in the form in which it is sold, and is not intended for subsequent commercial manufacture or modification. Such products include but are not limited to: conditioners, hair colorants, body wash, shampoo, facial wash, and dish detergent for and/or methods relating to treating hair (human, dog, and/or cat), including bleaching, coloring, dyeing, conditioning, shampooing, styling; personal cleansing; cosmetics; skin care including application of creams, lotions, and other topically applied products for consumer use; and shaving products, products for and/or methods relating to treating fabrics, hard surfaces and any other surfaces in the area of home care, including: air care, car care, dishwashing, hard surface cleaning and/or treatment, and other cleaning for consumer or institutional use; products and/or methods relating to oral care including toothpastes, tooth gels, tooth rinses, denture adhesives, tooth whitening; over-the-counter health care including cough and cold remedies, pain relievers, pet health and nutrition, and water purification.

The composition may further comprise a benefit agent in addition to the filler particles and the polymer. The benefit agent may comprise: perfumes, pro-perfumes, finishing aids, malodor control and removal agents, odor neutralizers, polymeric dye transfer inhibiting agents builders, heavy metal ion sequestrants, surfactants, suds stabilizing polymers, dye fixatives, dye abrasion inhibitors, soil capture polymers, flocculating polymers, colorants, pigments, aversive agents such as bittering agents, anti-redeposition agents, bleach activators, bleach catalysts, bleach boosters, bleaches, photobleaches, enzymes, coenzymes, enzyme stabilizers, crystal growth inhibitors, anti-tarnishing agents, anti-oxidants, metal ion salts, corrosion inhibitors, antiperspirant, zinc pyrithione, plant derivatives, plant extracts, plant tissue extracts, plant seed extracts, plant oils, botanicals, botanical extracts, essential oils, skin sensates, astringents, (e.g., clove oil, menthol, camphor, eucalyptus oil, eugenol, menthyl lactate, witch hazel distillate), anti-acne agents (salicylic acid), anti-dandruff agents, antifoaming agents, cosmetic astringents, cosmetic biocides, denaturants, drug astringents, external analgesics, film formers or materials, e.g., polymers, for aiding the film-forming properties of the composition (e.g., copolymer of eicosene and vinyl pyrrolidone), skin bleaching and lightening agents, (e.g., hydroquinone, kojic acid, ascorbic acid, magnesium ascorbyl phosphate, ascorbyl glucoside, pyridoxine), skin-conditioning agents (e.g., humectants and occlusive agents), skin soothing and/or healing agents and derivatives (e.g., panthenol, and derivatives such as ethyl panthenol, aloe-vera, pantothenic acid and its derivatives, allantoin, bisabolol, and dipotassium glycyrrhizinate), skin treating agents (e.g., vitamin D compounds, mono-, di-, and tri-terpenoids, beta-ionol, cedrol), sunscreen agents, insect repellants, oral care actives, personal health care actives, vitamins, anti-bacterial agents, anti-microbial agents, antifungal agents, their derivatives, and mixtures thereof.

In one embodiment, the benefit agent is at least partially surrounded with a wall material to create a microcapsule. In one aspect, the microcapsule wall material may comprise: melamine, polyacrylamide, silicones, silica, polystyrene, polyurea, polyurethanes, polyacrylate based materials, gelatine, styrene malic anhydride, polyamides, and mixtures thereof. In one aspect, said melamine wall material may comprise melamine crosslinked with formaldehyde, melamine-dimethoxyethanol crosslinked with formaldehyde, and mixtures thereof. In one aspect, said polystyrene wall material may comprise polyestyrene cross-linked with divinylbenzene. In one aspect, said polyurea wall material may comprise urea crosslinked with formaldehyde, urea crosslinked with gluteraldehyde, and mixtures thereof. In one aspect, said polyacrylate based materials may comprise polyacrylate formed from methylmethacrylate/dimethylaminomethyl methacrylate, polyacrylate formed from amine acrylate and/or methacrylate and strong acid, polyacrylate formed from carboxylic acid acrylate and/or methacrylate monomer and strong base, polyacrylate formed from an amine acrylate and/or methacrylate monomer and a carboxylic acid acrylate and/or carboxylic acid methacrylate monomer, and mixtures thereof. In one aspect, the perfume microcapsule may be coated with a deposition aid, a cationic polymer, a non-ionic polymer, an anionic polymer, or mixtures thereof. Suitable polymers may be selected from the group consisting of: polyvinylformaldehyde, partially hydroxylated polyvinylformaldehyde, polyvinylamine, polyethyleneimine, ethoxylated polyethyleneimine, polyvinylalcohol, polyacrylates, and combinations thereof. In one aspect, one or more types of microcapsules, for example two microcapsules types having different benefit agents may be used.

In one embodiment, the benefit agent is a perfume oil and may include materials selected from the group consisting of 3-(4-*t*-butylphenyl)-2-methyl propanal, 3-(4-*t*-butylphenyl)-propanal, 3-(4-isopropylphenyl)-2-methylpropanal, 3-(3,4-methylenedioxyphenyl)-2-methylpropanal, and 2,6-dimethyl-5-heptenal, delta-damascone, alpha-damascone, beta-damascone, beta-damascenone, 6,7-dihydro-1,1,2,3,3-pentamethyl-4(5H)-indanone, methyl-7,3-dihydro-2H-1,5-benzodioxepine-3-one, 2-[2-(4-methyl-3-cyclohexenyl-1-yl)propyl]cyclopentan-2-one, 2-sec-butylcyclohexanone, and □-dihydro ionone, linalool, ethyllinalool, tetrahydrolinalool, and dihydromyrcenol. Suitable perfume materials can be obtained from Givaudan Corp. of Mount Olive, New Jersey, USA, International Flavors & Fragrances Corp. of South Brunswick, New Jersey, USA, or Quest Corp. of Naarden, Netherlands.In one aspect, the benefit agent is a perfume microcapsule.

In one embodiment, the benefit agent is encapsulated in a shell. In one embodiment, the encapsulated benefit agent is perfume oil and the shell is a polymer.

In one embodiment the benefit agent is an enzyme. Suitable enzymes include proteases, amylases, cellulases, lipases, xylogucanases, pectate lyases, mannanases, bleaching enzymes, cutinases, and mixtures thereof.

For the enzymes, accession numbers or IDs shown in parentheses refer to the entry numbers in the databases Genbank, EMBL and Swiss-Prot. For any mutations standard 1-letter amino acid codes are used with a * representing a deletion. Accession numbers prefixed with DSM refer to microorgansims deposited at Deutsche Sammlung von Mikroorganismen und Zellkulturen GmbH, Mascheroder Weg 1b, 38124 Brunswick (DSMZ).

**Protease.** The composition may comprise a protease. Suitable proteases include metalloproteases and/or serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:
(a) subtilisins (EC 3.4.21.62), including those derived from *Bacillus*, such as *Bacillus lentus, Bacillus alkalophilus* (P27963, ELYA_BACAO) , *Bacillus subtilis, Bacillus amyloliquefaciens* (P00782, SUBT_BACAM), *Bacillus pumilus (P07518) and Bacillus gibsonii* (DSM14391).
(b) trypsin-type or chymotrypsin-type proteases, such as trypsin (e.g. of porcine or bovine origin), including the Fusarium protease and the chymotrypsin proteases derived from *Cellumonas* (A2RQE2).
(c) metalloproteases, including those derived from *Bacillus amyloliquefaciens* (P06832, NPRE_BACAM).

Preferred proteases include those derived from *Bacillus gibsonii* or *Bacillus Lentus* such as subtilisin *309* (P29600) and/or DSM 5483 (P29599).

Suitable commercially available protease enzymes include: those sold under the trade names Alcalase^{®}, Savinase^{®}, Primase^{®}, Durazym^{®}, Polarzyme^{®}, Kannase^{®}, Liquanase^{®}, Liquanase Ultra^{®}, Savinase Ultra^{®}, Ovozyme^{®}, Neutrase^{®}, Everlase^{®} and Esperase^{®} by Novozymes A/S (Denmark); those sold under the tradename Maxatase^{®}, Maxacal^{®}, Maxapem^{®}, Properase^{®}, Purafect^{®}, Purafect Prime^{®}, Purafect Ox^{®}, FN3^{®} , FN4^{®}, Excellase^{®} and Purafect OXP^{®} by Genencor International; those sold under the tradename Opticlean^{®} and Optimase^{®} by Solvay Enzymes; those available from Henkel/Kemira, namely BLAP (P29599 having the following mutations S99D + S101 R + S103A + V104I + G159S), and variants thereof including BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) all from Henkel/Kemira; and KAP (Bacillus alkalophilus subtilisin with mutations A230V + S256G + S259N) from Kao.

**Amylase:** Suitable amylases are alpha-amylases, including those of bacterial or fungal origin. Chemically or genetically modified mutants (variants) are included. A preferred alkaline alpha-amylase is derived from a strain of *Bacillus*, such as *Bacillus licheniformis, Bacillus amyloliquefaciens*, *Bacillus stearothermophilus*, *Bacillus subtilis*, or other *Bacillus sp.*, such as *Bacillus sp.* NCIB 12289, NCIB 12512, NCIB 12513, sp 707, DSM 9375, DSM 12368, DSMZ no. 12649, KSM AP1378, KSM K36 or KSM K38. Preferred amylases include:
(a) alpha-amylase derived from *Bacillus licheniformis* (P06278, AMY_BACLI), and variants thereof, especially the variants with substitutions in one or more of the following positions: 15, 23, 105, 106, 124, 128, 133, 154, 156, 181, 188, 190, 197, 202, 208, 209, 243, 264, 304, 305, 391, 408, and 444.
(b) AA560 amylase (CBU30457, HD066534) and variants thereof, especially the variants with one or more substitutions in the following positions: 26, 30, 33, 82, 37, 106, 118, 128, 133, 149, 150, 160, 178, 182, 186, 193, 203, 214, 231, 256, 257, 258, 269, 270, 272, 283, 295, 296, 298, 299, 303, 304, 305, 311, 314, 315, 318, 319, 339, 345, 361, 378, 383, 419, 421, 437, 441, 444, 445, 446, 447, 450, 461, 471, 482, 484, preferably that also contain the deletions of D183* and G184*.
(c) variants exhibiting at least 90% identity with the wild-type enzyme from *Bacillus SP722* (CBU30453, HD066526), especially variants with deletions in the 183 and 184 positions.

Suitable commercially available alpha-amylases are Duramyl^{®}, Liquezyme^{®} Termamyl^{®}, Termamyl Ultra^{®}, Natalase^{®}, Supramyl^{®}, Stainzyme^{®}, Stainzyme Plus^{®}, Fungamyl^{®} and BAN^{®} (Novozymes A/S), Bioamylase^{®} and variants thereof (Biocon India Ltd.), Kemzym^{®} AT 9000 (Biozym Ges. m.b.H, Austria), Rapidase^{®} , Purastar^{®}, Optisize HT Plus^{®}, Enzysize^{®}, Powerase^{®} and Purastar Oxam^{®}, Maxamyl^{®} (Genencor International Inc.) and KAM^{®} (KAO, Japan). Preferred amylases are Natalase^{®}, Stainzyme^{®} and Stainzyme Plus^{®}.

**Cellulase:** The composition may comprise a cellulase. Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g., the fungal cellulases produced from *Humicola insolens, Myceliophthora thermophila* and *Fusarium oxysporum.*

Commercially available cellulases include Celluzyme^{®}, and Carezyme^{®} (Novozymes A/S), Clazinase^{®}, and Puradax HA^{®} (Genencor International Inc.), and KAC-500(B)^{®} (Kao Corporation).

In one aspect, the cellulase can include microbial-derived endoglucanases exhibiting endo-beta-1,4-glucanase activity (E.C. 3.2.1.4), including a bacterial polypeptide endogenous to a member of the genus *Bacillus* which has a sequence of at least 90%, 94%, 97% and even 99% identity to the amino acid sequence SEQ ID NO:2 in US 7,141,403), appended hereto as Sequence 1, and mixtures thereof. Suitable endoglucanases are sold under the tradenames Celluclean^{®} and Whitezyme^{®} (Novozymes A/S, Bagsvaerd, Denmark).

Preferably, the composition comprises a cleaning cellulase belonging to Glycosyl Hydrolase family 45 having a molecular weight of from 17kDa to 30 kDa, for example the endoglucanases sold under the tradename Biotouch^{®} NCD, DCC and DCL (AB Enzymes, Darmstadt, Germany).

Highly preferred cellulases also exhibit xyloglucanase activity, such as Whitezyme^{®}.

Lipase. The composition may comprise a lipase. Suitable lipases include those of bacterial or fungal origin. Chemically modified or protein engineered mutants are included. Examples of useful lipases include lipases from *Humicola* (synonym *Thermomyces*), e.g., from *H. lanuginosa* (*T. lanuginosus*), or from *H. insolens,* a Pseudomonas lipase, e.g., from *P. alcaligenes* or *P*. *pseudoalcaligenes*, *P. cepacia*, *P. stutzeri*, *P. fluorescens, Pseudomonas* sp. strain SD 705, *P*. *wisconsinensis*, a *Bacillus* lipase, e.g., from *B. subtilis*, *B. stearothermophilus* or *B. pumilus.*

The lipase may be a "first cycle lipase", preferably a variant of the wild-type lipase from *Thermomyces lanuginosus* comprising T231R and N233R mutations. The wild-type sequence is the 269 amino acids (amino acids 23 - 291) of the Swissprot accession number Swiss-Prot O59952 (derived from *Thermomyces lanuginosus* (*Humicola lanuginosa*))*.* Preferred lipases would include those sold under the tradenames Lipex^{®}, Lipolex^{®} and Lipoclean^{®} by Novozymes, Bagsvaerd, Denmark.

Preferably, the composition comprises a variant of *Thermomyces lanuginosa* (O59952) lipase having >90% identity with the wild type amino acid and comprising substitution(s) at T231 and/or N233, preferably T231R and/or N233R.

In another aspect, the composition comprises a variant of *Thermomyces lanuginosa* (O59952) lipase having >90% identity with the wild type amino acid and comprising substitution(s):
(a) S58A +V60S + I83T +A150G +L227G +T231R +N233R +I255A +P256K;
(b) S58A +V60S + I86V +A150G +L227G +T231R +N233R +I255A +P256K;
(c) S58A +V60S + I86V +T143S +A150G +L227G +T231R +N233R +I255A +P256K;
(d) S58A +V60S + I86V +T143S +A150G +G163K +S216P +L227G +T231R +N233R +I255A +P256K;
(e) E1* +S58A +V60S + I86V +T143S +A150G +L227G +T231R +N233R +I255A +P256K;
(f) S58A +V60S + I86V +K98I +E99K +T143S +A150G +L227G +T231R +N233R +I255A +P256K;
(g) E1N +S58A +V60S + I86V +K98I +E99K +T143S +A150G +L227G +T231R +N233R +I255A +P256K +L259F;
(h) S58A +V60S + I86V +K98I +E99K +D102A +T143S +A150G +L227G +T231R +N233R +I255A +P256K;
(i) N33Q +S58A +V60S + I86V +T143S +A150G +L227G +T231R +N233R +I255A +P256K;
(j) E1* +S58A +V60S + I86V +K98I +E99K +T143S +A150G +L227G +T231R +N233R +I255A +P256K;
(k) E1N +S58A +V60S + I86V +K98I +E99K +T143S +A150G +S216P +L227G +T231R +N233R +I255A +P256K;
(l) D27N +S58A +V60S + I86V +G91N +N94R +Dl U N +T143S +A150G +L227G +T231R +N233R +I255A +P256K;
(m) E1N +S58A +V60S + I86V +K98I +E99K +T143S +A150G +E210A +S216P +L227G +T231R +N233R +1255A +P256K;
(n) A150G +E210V +T231R +N233R +I255A +P256K; and
(o) I202L +E210G +T231R +N233R +I255A +P256K.

**Xyloglucanase:** Suitable xyloglucanase enzymes have enzymatic activity towards both xyloglucan and amorphous cellulose substrates, wherein the enzyme is a glycosyl hydrolase (GH) is selected from GH families 5, 12, 44 or 74. Preferably, the glycosyl hydrolase is selected from GH family 44. Suitable glycosyl hydrolases from GH family 44 are the XYG1006 glycosyl hydrolase from *Paenibacillus polyxyma* (ATCC 832) and variants thereof.

**Pectate lyase:** Suitable pectate lyases are either wild-types or variants of Bacillus-derived pectate lyases (CAF05441, AAU25568) sold under the tradenames Pectawash^{®}, Pectaway^{®} and X-Pect^{®} (from Novozymes A/S, Bagsvaerd, Denmark).

**Mannanase:** Suitable mannanases are sold under the tradenames Mannaway^{®} (from Novozymes A/S, Bagsvaerd, Denmark), and Purabrite^{®} (Genencor International Inc., Palo Alto, California).

**Bleaching enzyme:** Suitable bleach enzymes include oxidoreductases, for example oxidases such as glucose, choline or carbohydrate oxidases, oxygenases, catalases, peroxidases, like halo-, chloro-, bromo-, lignin-, glucose- or manganese-peroxidases, dioxygenases or laccases (phenoloxidases, polyphenoloxidases). Suitable commercial products are sold under the Guardzyme^{®} and Denilite^{®} ranges from Novozymes. Advantageously, additional, preferably organic, particularly preferably aromatic compounds are incorporated with the bleaching enzyme; these compounds interact with the bleaching enzyme to enhance the activity of the oxidoreductase (enhancer) or to facilitate the electron flow (mediator) between the oxidizing enzyme and the stain typically over strongly different redox potentials.

Other suitable bleaching enzymes include perhydrolases, which catalyse the formation of peracids from an ester substrate and peroxygen source. Suitable perhydrolases include variants of the Mycobacterium smegmatis perhydrolase, variants of so-called CE-7 perhydrolases, and variants of wild-type subtilisin Carlsberg possessing perhydrolase activity.

**Cutinase:** Suitable cutinases are defined by E.C. Class 3.1.1.73, preferably displaying at least 90%, or 95%, or most preferably at least 98% identity with a wild-type derived from one of *Fusarium solani*, *Pseudomonas Mendocina* or *Humicola Insolens.*

**Identity.** The relativity between two amino acid sequences is described by the parameter "identity". For purposes of the present invention, the alignment of two amino acid sequences is determined by using the Needle program from the EMBOSS package (http://emboss.org) version 2.8.0. The Needle program implements the global alignment algorithm described in Needleman, S. B. and Wunsch, C. D. (1970) J. Mol. Biol. 48, 443-453. The substitution matrix used is BLOSUM62, gap opening penalty is 10, and gap extension penalty is 0.5.

The polymers of the current invention are particularly useful for including benefit agents that are temperature sensitive and may otherwise be difficult to incorporate into other water-soluble polymers like polyvinyl alcohol. Benefit agents that are known to be temperature sensitive include perfume, encapsulated perfume, enzymes, bittering agent, vitamins, botanical extracts and mixtures thereof.

Examples of a temperature sensitivity include boiling point, flash point, degradation, and/ or denaturing. Perfumes are particularly challenging to incorporate into polymers because many of the perfume ingredients have low boiling points and/ or low flash points causing loss of perfume during processing or dangerous processing conditions due to risk of fire. Enzymes are particularly challenging to incorporate into water-soluble polymers because enzymes are prone to degrading and denaturing when exposed to temperatures above room temperature. Any degradation or denaturing of an enzyme will cause a loss in activity and efficacy of the enzyme or protein.

Compositions of the present invention may contain from about 0.5 to about 35 percent by weight of a benefit agent, alternatively from about 1 to about 30 percent by weight or from about 2 to about 25 percent by weight. Compositions of the present invention may contain from about 1 to about 45 percent by weight of a filler, alternatively from about 2 to about 35 percent by weight or from about 5 to about 25 percent by weight. In one embodiment, the composition contains a poly urea polymer, at least one benefit agent and at least one filler.

In one embodiment, the three-dimensional object comprises a container filled with one or more benefit agents. The container may be comprised at least partially from the materials of the invention to provide water solubility to at least a portion of the container to release the benefit agent. The benefit agent may comprise a single solid element, a collection of solid powder elements, a liquid or a gas. In one embodiment, the benefit agent may comprise a solid or powder and the benefit agent may enable the printing of a portion of the container directly in contact with the benefit agent, the benefit agent providing structural support for the printing, to close the container.

In one embodiment, the benefit agent is an oral care active. Suitable oral care actives include prevention agents including, but not limited to: sodium fluoride, stannous fluoride, sodium monofluorophosphate; dentinal hypersensitivity treatments including, but not limited to: potassium nitrate, strontium chloride and stannous fluoride; gingivitis prevention and treatment agents, including, but not limited to stannous fluoride, triclosan, cetyl pyridinium chloride and chlorhexidine; dental erosion prevention agents including, but not limited to: sodium fluoride, stannous fluoride and sodium polyphosphate; periodontitis treatment agents including, but not limited to chlorhexidine, tetracycline, doxycycline, and ketoprofen; dry mouth amelioration agents including, but not limited to pilocarpine, pellitorin.

In one embodiment, the benefit agent is a personal health care active. Suitable personal health care actives include Personal Health care: Cold and flu treatments including, but not limited to, Anti histamines, such as diphenhydramine hydrochloride, Doxylamine succinat, Chlorpheneramine Maleate, fexofenadine, terfenadine, cetirizine Decongestants; such as Phehylephrine Hydrochloride, Pseudoephedrine, Oxymetazoline, Expectorants, such as Guaifenesin, Cough Suppressants; such as dextromethorpand hydrobromide, Antipyretics and Analgesics, such as Acetaminophen, Ibuprofen, Naproxen, Aspirin. Antacids including but not limited to Acid reducers such as, magnesium Hydroxide, Aluminum Hydroxide, Calcium carbonate, Sodium bicarbonate, simethicone; H2 Antagonist, such as, cimetidine, ranitidine, famotidine; Proton Pump inhibitors, such as Omeprazole, Pantoprazole. Antidiarrheals including but not limited to bismuth subsalicylate, loperamide. Probiotics including but not limited to bifidobacterium infantis, lactobacillus acidophilus. Bulk forming fibers including but not limited to Psyllium.

In one embodiment, the benefit agent is a fluorescent brightener and may include materials selected from the group consisting of: di-styryl biphenyl compounds, e.g. Tinopal^{®} CBS-X, di-amino stilbene di-sulfonic acid compounds, e.g. Tinopal^{®} DMS pure Xtra and Blankophor^{®} HRH, and Pyrazoline compounds, e.g. Blankophor^{®} SN, and coumarin compounds, e.g. Tinopal^{®} SWN. Preferred brighteners are: sodium 2 (4-styryl-3-sulfophenyl)-2H-napthol[1,2-d]triazole, disodium 4,4'-bis{[(4-anilino-6-(N methyl-N-2 hydroxyethyl)amino 1 ,3,5- triazin-2-yl)];amino}stilbene-2-2' disulfonate, disodium 4,4'-bis{[(4-anilino-6-morpholino-1,3,5-triazin-2-yl)]amino} stilbene-2-2' disulfonate, and disodium 4,4'- bis(2-sulfostyryl)biphenyl. A suitable fluorescent brightener is C.I. Fluorescent Brightener 260, which may be used in its beta or alpha crystalline forms, or a mixture of these forms.

In one embodiment, the benefit agent is a chelant and may include materials selected from the group consisting of: diethylene triamine pentaacetate, diethylene triamine penta(methyl phosphonic acid), ethylene diamine-N'N'-disuccinic acid, ethylene diamine tetraacetate, ethylene diamine tetra(methylene phosphonic acid) and hydroxyethane di(methylene phosphonic acid). A preferred chelant is ethylene diamine-N'N'-disuccinic acid and/or hydroxyethane diphosphonic acid.

In one embodiment, the benefit agent is a hueing agent and may include materials selected from the group consisting of: small molecule dyes, typically falling into the Color Index (C.I.) classifications of Acid, Direct, Basic, Reactive or hydrolyzed Reactive, Solvent or Disperse dyes for example that are classified as Blue, Violet, Red, Green or Black, and provide the desired shade either alone or in combination. Preferred hueing agents include Acid Violet 50, Direct Violet 9, 66 and 99, Solvent Violet 13 and any combination thereof. Suitable hueing agents include phthalocyanine and azo dye conjugates, such as described in WO2009/069077.

Polymer compositions can be created by any method of mixing or blending of the molten polymer with the fillers and benefit agents. In one example, the polymer is melted in a glass jar, benefit agents and fillers added by weight and mixed by hand to create the composition.

Voxel error relates to any change in dimensional requirements of a voxel due to expansion, shrinkage or movement of the material disposed for a particular voxel from the dimensional limits of that voxel. Voxel error magnitude for any particular may be calculated as the volume percent of the voxel which is missing at the time that the last voxel of the overall translation which is adjacent to the particular voxel, is deposited.

### Examples

### Synthesis Example 1: Poly[polyethylene glycol - block - urea]

All polymers of this invention were synthesized in a similar manner. In a typical synthesis, 2,000 g/mol polyethylene glycol diamine (10 g, 0.005 mol, Mn ~ 2,000g/mol) and urea (0.30 g, 0.005 mol) were introduced into a 100 mL round-bottomed flask equipped with a metal stir rod, gas inlet, distillation apparatus, and a mechanical overhead stirrer. The reactor was degassed and purged with nitrogen three times to remove oxygen from the system. The reaction was stirred at 80 RPM under a constant nitrogen flow at 180 C for 30 min. The temperature was ramped to 200 C for 30 min and 220 C for 30 min to keep the polymer molten. After 30 min at 220 C, vacuum was applied until 0.15 mmHg and the reaction proceeded under vacuum for 2 h. The heating source was removed, and the reaction was allowed to cool overnight under static vacuum. The polymers were removed from the round-bottomed flask and used without further purification.

### Synthesis Example 2: Poly[(2 (O,O'-Bis(2-aminopropyl) polypropylene glycol-block-polyethylene glycol-block-polypropylene glycol polymer) - block - Urea]

In a typical synthesis, 2,000 g/mol 2 O,O'-Bis(2-aminopropyl) polypropylene glycol-block-polyethylene glycol-block-polypropylene glycol polymer (Jeffamine^{™} ED 2003, 10 g, 0.005 mol) and urea (0.30 g, 0.005 mol) were introduced into a 100 mL round-bottomed flask equipped with a metal stir rod, gas inlet, distillation apparatus, and a mechanical overhead stirrer. The reactor was degassed and purged with nitrogen three times to remove oxygen from the system. The reaction was stirred at 80 RPM under a constant nitrogen flow at 180 C for 30 min. The temperature was ramped to 200 C for 30 min and 220 C for 30 min to keep the polymer molten. After 30 min at 220 C, vacuum was applied until 0.15 mmHg and the reaction proceeded under vacuum for 2 h. The heating source was removed, and the reaction was allowed to cool overnight under static vacuum. The polymers were removed from the round-bottomed flask and used without further purification.

### Comparative Synthesis Example 1: Poly[2,2'-(Ethylenedioxy)bis(ethylamine) - block - urea]

In a typical synthesis, 2,2'-(Ethylenedioxy)bis(ethylamine) (10 g, 0.0675) and urea (2.70 g, 0.0450 mol) were introduced into a 100 mL round-bottomed flask equipped with a metal stir rod, gas inlet, distillation apparatus, and a mechanical overhead stirrer. The reactor was degassed and purged with nitrogen three times to remove oxygen from the system. The reaction was stirred at 80 RPM under a constant nitrogen flow at 180 C for 30 min. The temperature was ramped to 200 C for 30 min and 220 C for 30 min to keep the polymer molten. After 30 min at 220 C, vacuum was applied until 0.15 mmHg and the reaction proceeded under vacuum for 2 h. The heating source was removed, and the reaction was allowed to cool overnight under static vacuum. The polymers were removed from the round-bottomed flask and used without further purification.
Table 1 and 2 provide data regarding five exemplary polymers (P1-P5) and two comparative polymers (CP1-CP2).

**Table 1**

| Polymer Example | Monomer A: 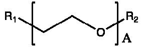 | | | | | Monomer B | | Monomer C | |
|---|---|---|---|---|---|---|---|---|---|
| | R1 | R2 | A | (B+C)/ A | Wt. % | Type | Wt. % | Type | Wt. % |
| P1 | -NH2 | -(C2H4)NH2 | 227 | 0 | 99.4 | Urea | 0.6 | N/A | N/A |
| P2 | -NH2 | -(C2H4)NH2 | 136 | 0 | 99.0 | Urea | 1.0 | N/A | N/A |
| P3 | -NH2 | -(C2H4)NH2 | 45 | 0 | 97.1 | Urea | 2.9 | N/A | N/A |
| P4 | 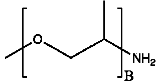 B = 3 | 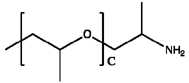 C=3 | 39 | 0.15 | 97.1 | Urea | 2.9 | N/A | N/A |
| P5 | 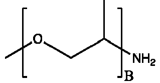 B = 3 | 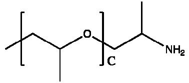 C=3 | 12.5 | 0.48 | 93.8 | Urea | 6.3 | N/A | N/A |
| CP1 | 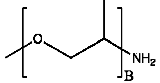 B = 1.8 | 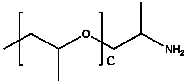 C = 1.8 | 9 | 0.40 | 90.9 | Urea | 9.1 | N/A | N/A |
| CP2 | -NH2 | -(C2H4)NH2 | 2 | 0 | 75 | Urea | 25 | N/A | N/A |

**Table 2**

| Polymer Example | Tm* | Water Soluble [1 g/L] | | Melt Viscosity at 1/s** | | Suitability for FDM |
|---|---|---|---|---|---|---|
| | [C] | [Y/N] | Time [min] | [Pa s] | [C] | |
| P1 | 62 | Y | 11 | 910 | 100 | Okay |
| P2 | 58 | Y | 13 | 6,210 | 100 | Good |
| P3 | 48 | Y | 17 | 11,900 | 100 | Good |
| P4 | 35 | Y | 28 | 5,600 | 60 | Good |
| P5 | 15 | Y | 33 | 76,800 | 60 | Okay*** |
| CP1 | n/a | Y | 34 | 30,000 | 60 | Poor |
| CP2 | 130, 140 | N | n/a | 1,390 | 160 | n/a^{#} |

| | | | | | | |
|---|---|---|---|---|---|---|
| * Melting temperature determined by differential scanning calorimetry ** Melt viscosity determined from melt rheology *** Printed using a bed cooled with dry ice to reduce bed temperature below Tm ^{#}Not tested for printability | | | | | | |

All polymers of this invention were synthesized in a similar manner. In a typical synthesis, monomer A (1 mol equivalent) and monomer B (1 mol equivalent) were introduced into a 100 mL round-bottomed flask equipped with a metal stir rod, gas inlet, distillation apparatus, and a mechanical overhead stirrer. The reactor was degassed and purged with nitrogen three times to remove oxygen from the system. The reaction was stirred at 80 RPM under a constant nitrogen flow at 180 C for 30 min. The temperature was ramped to 200 C for 30 min and 220 C for 30 min to keep the polymer molten. After 30 min at 220 C, vacuum was applied until 0.15 mmHg and the reaction proceeded under vacuum for 2 h. The heating source was removed, and the reaction was allowed to cool overnight under static vacuum. The polymers were removed from the round-bottomed flask and used without further purification.

The physical characteristics of all polymers are illustrated in Table 2 and P1 - P5 and comparative polymer CP1 were tested to access suitability for FDM printing. P1 - P3 were synthesized using PEG diamines of various molecular weights and urea. P1 uses the highest molecular weight PEG diamine (average of 227 repeat units) and has acceptable melt temperature (62 C) and melt viscosity (910 Pa s) for FDM printing. P2 and P3 were synthesized using lower molecular weight PEG diamine (average of 136 and 45 repeat units, respectively) and have lower melting temperatures and higher melt viscosities. P4 and P5 were synthesized using Jeffamine ED 2003 and ED 900, respectively and comparative polymer CP 1 Jeffamine ED 600. P4 and P5 have lower average ethylene glycol repeat units (39 and 12.5 respectively) and lower melting temperature (35 and 15 C, respectively). CP1 has only nine average ethylene glycol repeat units and does not exhibit a melt temperature. All polymers except CP2 are soluble in water and the time to dissolve is inversely related to the number of ethylene oxide repeat units. Polymer CP2 has only 2 reperate ethylene oxide units in monomer A and is insoluble in water.

Not to be bound by theory, the melt viscosity and melt temperature are inversely related to the average number of ethylene glycol repeat units in the polymer. Polymers with less than about 10 ethylene oxide units (like CP1) are amorphous at room temperature rendering them unsuitable for FDM printing. Polymers with more than about 300 ethylene oxide repeat units have a melt viscosity that is too low for FDM printing.

The relatively low melting and processing temperature of polymers of the current invention allows for incorporation of benefit agents. Benefit agents can be added by mixing the benefit agents with molten polymer and cooling below the compositions melt temperature. Compositions are created by combining all ingredients by weight at room temperature in a glass jar, sealing the jar, melting the composition by placing in an oven, mixing the composition using a metal spatula and allowing mixture to cool and freeze at room temperature. Examples of compositions C1 - C8 of the current invention are shown in Table 3. Compositions C1 - C8 can be useful, for example, as scent and cleaning boosters in the process of laundering cloths.

**Table 3.**

| Ingredient | C1 | C2 | C3 | C4 | C5 | C6 | C7 | C8 |
|---|---|---|---|---|---|---|---|---|
| Polymer Type | P1 | P2 | P2 | P3 | P4 | P3 | P4 | P3 |
| Polymer [wt. %] | 97 | 94 | 96 | 94 | 89 | 99 | 87 | 94 |
| Perfume Oil [wt. %] | 2 | 3 | 1 | 2 | 4 | 1 | 5 | 0.5 |
| Encapsulated Perfume Oil [wt. %]¹ | 0 | 2 | 3 | 0 | 1 | 0 | 3 | 2 |
| Lipase [wt. %]² | 0 | 0 | 0 | 1 | 1 | 0 | 0 | 0.5 |
| Amylase [wt. %]³ | 0 | 1 | 0 | 1 | 1 | 0 | 0 | 0 |
| Sodium dodecyl sulfonate [wt. %]⁴ | 1 | 0 | 0 | 2 | 3 | 0 | 5 | 3 |

| | | | | | | | | |
|---|---|---|---|---|---|---|---|---|
| ¹Available from Encapsys ²Commercially available from Novozymes ³Commercially available from Novozymes ⁴Avaialble from SigmaAldrich | | | | | | | | |

### Test methods:

### Melting temperature determination

Differential scanning calorimetry (DSC) was performed on a TA instruments DSC Q2000 to determine the melting temperature of each polymer. A heat-cool-heat cycle from -90C to 150C at a rate of 5 C/min was performed, and the melting temperature was calculated as the maximum of the melting endotherm from the second heat.

### Melt Viscosity determination

The melt viscosity was determined using a TA instruments Ares G2 rheometer. Rheological experiments were performed in oscillation mode with 25 mm parallel plates at a constant temperature of 20 C above the melting point of the polymer. Frequency sweeps were performed between 0.1 - 100 rad/s at a constant strain of 1%.

### Time to dissolve

Polymers films with a thickness of 0.5 mm were placed in scintillation vials equipped with magnetic stir bars. Deionized water was added to the vials such that the concentration of the polymer in water was 1 mg/mL. The polymers were stirred at room temperature, and the time to dissolve was determined by eye as the time when the film was no longer visually apparent.

### FDM Printing of Mixtures

Polymers and mixtures are stored in sealed glass jars. Prior to printing, the material was melted into a high temperature syringe in a vacuum oven 70 C until fully molten and the bubbles have been removed. The syringe is inserted into a custom FDM printer. The syringe is heated to 80C and can be mechanically or pneumatically driven. The computer aided design (CAD) files of the part to print is digitally sliced to create a STL file and transferred to the 3D printer. The polymer was printed using a straight steel nozzle with the diameter of 1.36mm, at 30mm/min, using 6.2 bar air. The glass bed of the printer was cooled to ~0C without convection using dry ice.
<110> The Procter & Gamble Company
   Hodgdon, Travis
<120> Bacillus sp.
<130> 14494M
<140> 15/670198
   <141> 2017-08-07
<160> 1
<170> PatentIn version 3.5
<210> 1
   <211> 773
   <212> PRT
   <213> Bacillus sp.<400> 1

## Claims

1. A three-dimensional article comprising a set of voxels wherein at least one of the voxels comprise a water-soluble poly urea derived from
a) a polymer or mixture of polymers of the following structure 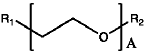 where
R₁ is selected from the group consisting of: -OH, -NH2, and 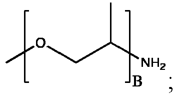
R2 is selected from the group consisting of: -(C₂H₄)NH₂, C₁ - C₆ alkyl, -H, and 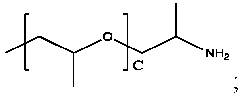
wherein A is between 10 and 300,
and (B+C)/A is between 0 and 0.6; and
b) a linker selected from the group consisting of: urea, methylene diphenyl diisocyanate, toluene diisocyanate, hexamethylene diisocyanate, isophorone diisocyanate and mixtures thereof;
wherein at least one R₁ or R₂ group contains nitrogen and the molar ratio of nitrogen atoms in (a) to (b) is 1:1.

2. The three-dimensional article according to claim 1 wherein the linker is urea.

3. The three-dimensional article according to claim 2 wherein the polymer is selected from the group consisting of:
i.) polyethylene glycol diamine having an average number of ethylene oxide repeat units from 10 to 300,
ii.) O,O'-Bis(2-aminopropyl) polypropylene glycol-block-polyethylene glycol-block-polypropylene glycol polymer with an average number of ethylene oxide repeat units of 10 to 300 and a molar ratio of propylene oxide repeat units to ethylene oxide repeat units less than 0.6,
iii.) poly(ethylene glycol)-block-poly(propylene glycol) bis(2-aminopropyl ether) with an average number of ethylene oxide units of 10 to 300 and a molar ratio of propylene oxide repeat units to ethylene oxide units less than 0.6,
iv.) and mixtures thereof.

4. The three-dimensional article according to Claim 1 further comprising from 0.5 to 35 percent by weight of a benefit agent, preferably wherein the benefit agent is selected form the group consisting of perfume, encapsulated perfume, enzymes, bittering agent, vitamins, botanical extracts and mixtures thereof.

5. The three-dimensional article according to Claim 1 further comprising from 1 to 65 percent by weight of a filler selected form the group consisting of starches, gums, water soluble polymers, water degradable polymers, water insoluble polymers, sugars, sugar alcohols, inorganic particles, surfactants, fatty amphiphiles and mixtures thereof.

6. The three-dimensional article according to Claim 1 wherein the filler is a surfactant.

7. The three-dimensional article according to Claim 6 further comprising from 0.5 to 35 percent by weight of a benefit agent selected form the group consisting of perfume, encapsulated perfume, enzymes, bittering agent, vitamins, botanical extracts and mixtures thereof.

8. A method for manufacturing a three-dimensional object, the method comprising steps of:
a) providing a set of digital voxels; and
b) sequentially creating asset of actual voxels corresponding to the set of digital voxels, wherein at least one of the actual voxels comprises a water-soluble poly urea derived from
i) a polymer or mixture of polymers of the following structure 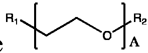 where
R₁ is selected from the group consisting of: -OH, -NH2, and 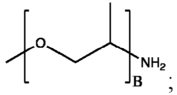
R2 is selected from the group consisting of: -(C₂H₄)NH₂, C₁ - C₆ alkyl, -H, and 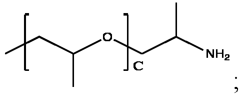
wherein A is between 10 and 300,
and (B+C)/A is between 0 and 0.6; and
ii) a linker selected from the group consisting of: urea, methylene diphenyl diisocyanate, toluene diisocyanate, hexamethylene diisocyanate, isophorone diisocyanate and mixtures thereof;
wherein at least one R₁ or R₂ group contains nitrogen and the molar ratio of nitrogen containing R₁ and R₂ groups in (i) to (ii) is 1:1.

9. The method according to claim 8 wherein the step of sequentially creating actual voxels corresponding to the set of digital voxels comprises creating at least one voxel comprising a filler.

10. The method according to Claim 9 wherein the actual voxels further comprise a benefit agent, a filler and mixtures thereof.

11. The method according to Claim 9 wherein the actual voxels contain a benefit agent and a filler.

12. The method according to claim 8 wherein the three-dimensional object comprises at least one void volume fully enclosed by voxels.

13. The method according to claim 12 wherein the void volume is at least partially filled with a solid, powder, liquid or mixtures thereof.

14. The method according to claim 8 wherein the three-dimensional object is a consumer product.

## Patentansprüche

1. Dreidimensionaler Artikel, der einen Voxelsatz umfasst, wobei mindestens eines der Voxel einen wasserlöslichen Polyharnstoff umfasst, der abgeleitet ist von
a) einem Polymer oder einer Mischung von Polymeren der folgenden Struktur 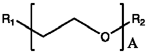 , wobei R₁ ausgewählt ist aus der Gruppe bestehend aus: -OH, -NH2 und 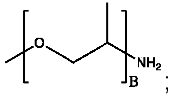
R2 ausgewählt ist aus der Gruppe bestehend aus: -(C₂H₄)NH₂, C₁-C₆-Alkyl, -H und 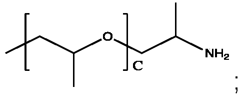
wobei A zwischen 10 und 300 liegt,
und (B+C)/A zwischen 0 und 0,6 liegt; und
b) einem Linker, ausgewählt aus der Gruppe bestehend aus: Harnstoff, Methylendiphenyldiisocyanat, Toluoldiisocyanat, Hexamethylendiisocyanat, Isophorondiisocyanat und Mischungen davon;
wobei mindestens eine R₁- oder R₂-Gruppe Stickstoff enthält und das Molverhältnis der Stickstoffatome in (a) bis (b) 1:1 beträgt.

2. Dreidimensionaler Artikel nach Anspruch 1, wobei der Linker Harnstoff ist.

3. Dreidimensionaler Artikel nach Anspruch 2, wobei das Polymer ausgewählt ist aus der Gruppe bestehend aus:
i.) Polyethylenglykoldiamin mit einer durchschnittlichen Anzahl an Ethylenoxid-Wiederholungseinheiten von 10 bis 300,
ii.) O,O'-Bis(2-aminopropyl)-polypropylenglykol-block-polyethylenglykol-block-polypropylenglykol-Polymer mit einer durchschnittlichen Anzahl an Ethylenoxid-Wiederholungseinheiten von 10 bis 300 und einem Molverhältnis von Propylenoxid-Wiederholungseinheiten zu Ethylenoxid-Wiederholungseinheiten von weniger als 0,6,
iii.) Poly(ethylenglykol)-block-poly(propylenglykol)-bis(2-aminopropylether) mit einer durchschnittlichen Anzahl an Ethylenoxid-Einheiten von 10 bis 300 und einem Molverhältnis von Propylenoxid-Wiederholungseinheiten zu Ethylenoxid-Einheiten von weniger als 0,6,
iv.) und Mischungen davon.

4. Dreidimensionaler Artikel nach Anspruch 1, ferner umfassend von 0,5 bis 35 Gewichtsprozent einen Wirkstoff, wobei der Wirkstoff vorzugsweise aus der Gruppe ausgewählt ist, die aus Duftstoff, eingekapseltem Duftstoff, Enzymen, Bitterstoffen, Vitaminen, botanischen Extrakten und Mischungen davon besteht.

5. Dreidimensionaler Artikel nach Anspruch 1, ferner umfassend von 1 bis 65 Gewichtsprozent ein Füllmittel, das aus der Gruppe ausgewählt ist, die aus Stärken, Gummis, wasserlöslichen Polymeren, wasserabbaubaren Polymeren, wasserunlöslichen Polymeren, Zuckern, Zuckeralkoholen, anorganischen Partikeln, Tensiden, amphiphilen Fettstoffen und Mischungen davon besteht.

6. Dreidimensionaler Artikel nach Anspruch 1, wobei das Füllmittel ein Tensid ist.

7. Dreidimensionaler Artikel nach Anspruch 6, ferner umfassend von 0,5 bis 35 Gewichtsprozent einen Wirkstoff, der aus der Gruppe ausgewählt ist, die aus Duftstoff, eingekapseltem Duftstoff, Enzymen, Bitterstoffen, Vitaminen, botanischen Extrakten und Mischungen davon besteht.

8. Verfahren zum Herstellen eines dreidimensionalen Objekts, wobei das Verfahren die folgenden Schritte umfasst:
a) Bereitstellen eines Satzes digitaler Voxel; und
b) sequenzielles Erzeugen eines Bestands an tatsächlichen Voxeln, die dem Satz digitaler Voxel entsprechen, wobei mindestens einer der tatsächlichen Voxel einen wasserlöslichen Polyharnstoff umfasst, der abgeleitet ist von
i) einem Polymer oder einer Mischung von Polymeren der folgenden Struktur 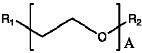 , wobei R₁ ausgewählt ist aus der Gruppe bestehend aus: -OH, -NH2 und 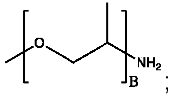
R2 ausgewählt ist aus der Gruppe bestehend aus: -(C₂H₄)NH₂, C₁-C₆-Alkyl, -H, and 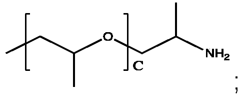
wobei A zwischen 10 und 300 liegt,
und (B+C)/A zwischen 0 und 0,6 liegt; und
ii) einem Linker, ausgewählt aus der Gruppe bestehend aus: Harnstoff, Methylendiphenyldiisocyanat, Toluoldiisocyanat, Hexamethylendiisocyanat, Isophorondiisocyanat und Mischungen davon;
wobei mindestens eine R₁- oder R₂-Gruppe Stickstoff enthält und das Molverhältnis von Stickstoff, der R₁ und R₂-Gruppen enthält, in (i) bis (ii) 1:1 beträgt.

9. Verfahren nach Anspruch 8, wobei der Schritt des sequenziellen Erzeugens eines tatsächlichen Voxels, der dem digitalen Voxelsatz entspricht, das Erzeugen von mindestens einem Voxel umfasst, das ein Füllmittel umfasst.

10. Verfahren nach Anspruch 9, wobei die tatsächlichen Voxel ferner einen Wirkstoff, ein Füllmittel und Mischungen davon umfassen.

11. Verfahren nach Anspruch 9, wobei die tatsächlichen Voxel einen Wirkstoff und ein Füllmittel enthalten.

12. Verfahren nach Anspruch 8, wobei das dreidimensionale Objekt mindestens ein Hohlraumvolumen umfasst, das vollständig von Voxeln umschlossen ist.

13. Verfahren nach Anspruch 12, wobei das Hohlraumvolumen mindestens teilweise mit einem Feststoff, Pulver, einer Flüssigkeit oder einer Mischung davon gefüllt wird.

14. Verfahren nach Anspruch 8, wobei das dreidimensionale Objekt ein Endprodukt ist.

## Revendications

1. Article tridimensionnel comprenant un ensemble de voxels dans lequel au moins l'un des voxels comprend une polyurée hydrosoluble dérivée de
a) un polymère ou mélange de polymères de la structure suivante 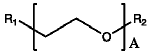 où R₁ est choisi dans le groupe constitué par : -OH, -NH2, et 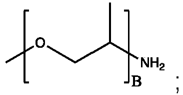
R2 est choisi dans le groupe constitué par : -(C₂H₄)NH₂, alkyle en C₁ à C₆, -H, et 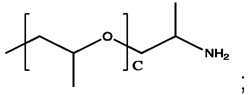
dans lequel A est compris entre 10 et 300,
et (B+C)/A est compris entre 0 et 0,6 ; et
b) un lieur choisi dans le groupe constitué par : urée, diphényl-diisocyanate de méthylène, diisocyanate de toluène, diisocyanate d'hexaméthylène, diisocyanate d'isophorone et mélanges de ceux-ci ;
dans lequel au moins un groupe R₁ ou R₂ contient de l'azote et le rapport molaire des atomes d'azote dans (a) à (b) vaut 1:1.

2. Article tridimensionnel selon la revendication 1 dans lequel le lieur est de l'urée.

3. Article tridimensionnel selon la revendication 2 dans lequel le polymère est choisi dans le groupe constitué par :
i.) une polyéthylène glycol diamine ayant un nombre moyen de motifs de répétition oxyde d'éthylène allant de 10 à 300,
ii.) un polymère séquencé O,O'-bis(2-aminopropyl) polypropylène glycolséquence-polyéthylène glycolséquence-séquence-polypropylène glycol avec un nombre moyen de motifs de répétition oxyde d'éthylène de 10 à 300 et un rapport molaire des motifs de répétition oxyde de propylène aux motifs de répétition oxyde d'éthylène inférieur à 0,6,
iii.) un poly(éthylène glycol)-séquence-poly(propylène glycol) bis-(éther 2-aminopropylique) avec un nombre moyen de motifs oxyde d'éthylène de 10 à 300 et un rapport molaire des motifs de répétition oxyde de propylène aux motifs oxyde d'éthylène inférieur à 0,6,
iv.) et des mélanges de ceux-ci.

4. Article tridimensionnel selon la revendication 1 comprenant en outre de 0,5 à 35 pour cent en poids d'un agent bénéfique, de préférence dans lequel l'agent bénéfique est choisi dans le groupe constitué par parfum, parfum encapsulé, enzymes, agent amérisant, vitamines, extraits botaniques et mélanges de ceux-ci.

5. Article tridimensionnel selon la revendication 1 comprenant en outre de 1 à 65 pour cent en poids d'une charge choisie dans le groupe constitué par amidons, gommes, polymères hydrosolubles, polymères dégradables dans l'eau, polymères insolubles dans l'eau, sucres, alcools de sucre, particules inorganiques, agents tensioactifs, amphiphiles gras et mélanges de ceux-ci.

6. Article tridimensionnel selon la revendication 1 dans lequel la charge est un agent tensioactif.

7. Article tridimensionnel selon la revendication 6 comprenant en outre de 0,5 à 35 pour cent en poids d'un agent bénéfique choisi dans le groupe constitué par parfum, parfum encapsulé, enzymes, agent amérisant, vitamines, extraits botaniques et mélanges de ceux-ci.

8. Procédé permettant de fabriquer un objet tridimensionnel, le procédé comprenant les étapes consistant à :
a) fournir un ensemble de voxels numériques ; et
b) créer séquentiellement une ressource de voxels réels correspondant à l'ensemble de voxels numériques, dans lequel au moins l'un des voxels réels comprend une polyurée hydrosoluble dérivée de
i) un polymère ou mélange de polymères de la structure suivante 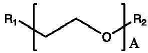 où R₁ est choisi dans le groupe constitué par : -OH, -NH2, et 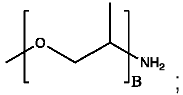
R2 est choisi dans le groupe constitué par : -(C₂H₄)NH₂, alkyle en C₁ à C₆, -H, et 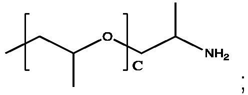
dans lequel A est compris entre 10 et 300,
et (B+C)/A est compris entre 0 et 0,6 ; et
ii) un lieur choisi dans le groupe constitué par : urée, diphényl-diisocyanate de méthylène, diisocyanate de toluène, diisocyanate d'hexaméthylène, diisocyanate d'isophorone et mélanges de ceux-ci ;
dans lequel au moins un groupe R₁ ou R₂ contient de l'azote et le rapport molaire des groupes R₁ et R₂ contenant de l'azote dans (i) à (ii) vaut 1:1.

9. Procédé selon la revendication 8 dans lequel l'étape consistant à créer séquentiellement des voxels correspondant à l'ensemble de voxels numériques comprend la création d'au moins un voxel comprenant une charge.

10. Procédé selon la revendication 9 dans lequel les voxels réels comprennent en outre un agent bénéfique, une charge et des mélanges de ceux-ci.

11. Procédé selon la revendication 9 dans lequel les voxels réels contiennent un agent bénéfique et une charge.

12. Procédé selon la revendication 8 dans lequel l'objet tridimensionnel comprend au moins un volume vide complètement enfermé par des voxels.

13. Procédé selon la revendication 12 dans lequel le volume vide est au moins partiellement rempli d'un solide, d'une poudre, d'un liquide ou de mélanges de ceux-ci.

14. Procédé selon la revendication 8 dans lequel l'objet tridimensionnel est un produit de consommation.
